# NEW EUROPEAN PATENT SPECIFICATION

(11) **EP 1 419 689 B2**
(45) Date of publication and mention of the opposition decision: **20.07.2016**
(45) Mention of the grant of the patent: 12.12.2007
(21) Application number: 04075184.4
(22) Date of filing: 01.10.1999
(51) Int. Cl.: A01K 9/00

(54) **An implement for automatically feeding animals**
Anordnung zur automatischen Fütterung von Tieren
Dispositif pour l'alimentation automatique d'animaux

(30) Priority: 13.10.1998 NL 1010305
(43) Date of publication of application: 19.05.2004
(62) Divisional of application: 99949453.7
(73) Proprietor: MAASLAND N.V., 3147 PA Maassluis (NL)
(72) Inventor: Van den Berg, Karel, 2971 BR Bleskensgraaf (NL); Van der Lely, Olaf, 6300 Zug (CH); Van der Lely, Alexander, 3065 NA Rotterdam (NL)
(74) Representative: Octrooibureau Van der Lely N.V.

(56) References cited:
- EP-A- 0 391 602
- EP-A- 0 628 244
- US-A- 5 074 248
- US-A- 5 355 833
- US-A- 5 778 820
- DATABASE WPI Week 199113 Derwent Publications Ltd., London, GB; AN 1991-092753 XP002318159 & SU 1 577 732 A (ORENBURGSKIJ) 15 July 1990 (1990-07-15)

## Description

The invention relales to an implement for auto-matically leading animals, such as calves or cows, according to the preamble of claim 1.

Such an implement is known from US-A-5455833 and has the disadvantage that the milk or mother's milk is yielded manually from the mother cow or dairy animal and is subsequently supplied to the feeding machine for young animals. This is very labour-intensive, especially because the young animals often have to be provided with milk or mother's milk many times a day. It may also be advantageous to compose a special feed for certain animals, such as bulls that are used for artificial insemination (Al-bulls). Also in that case feeding is very labour-intensive.

The invention aims at obviating these drawbacks. For that purpose the implement according to the invention comprises the characterizing features of claim 1 such that the milk or mother's milk is yielded by the milking machine and is supplied automatically and direct-ly from the milking machina to the individual animal wherein the transport system is adapted to supply the milk or mother's milk from the milking machine directly to a metering device. In this way it is no longer necessary to yield the milk or mother's milk manually and the milk is supplied automatically to the individual animal, such as a cell or an Al-bull.

According to another inventive feature as claimed in claim 2, an individual animal can be identified and the individual animal can be provided with feed, provided that a preset time has elapsed since the last feeding of this individual animal.

In accordance with an inventive feature as claimed in claim 3, the composition of the feed can be automatical attuned to the current nutritive requirements of the individual animal. The composition of the feed can be automatically attuned to the current nutritive requirements of the individual animal by adding one or more auxiliary substances by the features according to claim 4. The auxilliary substances that can be automatically added to the composition of the feed comprise inter alia water, vitamins, medicaments, nutritive supplements, immunological stimulants, or growth stimulants, such as hormones.
According to a further inventive feature according to claim 6, an automatic determination of the composition of the milk or mother's milk can be effected and, on the basis of said determination, the milk or mother's milk yielded by the milking machine can be automatically discharged or stored in a first or further storage means.

In accordance with another aspect of the invention according to claim 7, the milk or mother's milk yielded by the milking machine can be cooled down and stored in a liquid or solid phase in a first or further storage means. When storing the milk or mother's milk, the characteristics and the composition of the milk or mother's milk are maintained as optimally as possible, while the milk or mother's milk is preserved at the same time.

According to again another aspect of the invention according to claim 8, one or more characteristics, such as an identification number, of the dairy animal, such as a cow or mother cow from which the milk or mother's milk has been yielded, can be stored in a memory, and the milk or mother's milk from the dairy animal can be supplied to the corresponding individual animal, such as a calf. In this manner it is possible for the individual animal to receive milk or mother's milk from the mother.

In accordance with an inventive feature according to claim 9, the current nutritive requirements of the individual animal can be determined with the aid of automatic means and the composition of the feed can be attuned to the current nutritive requirements of the individual animal. In this way it is possibly to provide the individual animal with special feed, for example when the animal is III. According to a further inventive feature according to claim 10, the automatic means are adapted to determine the current nutritive requirements of the individual animal in an optical and/or acoustic manner, and/or on the basis of the animal's weight, and/or one or more dimensions of the individual animal. The data relating to the determination of the current nutritive requirements, nutritive need, the composition of the milk or mother's milk and the composition of the feed can be stored in a memory by the features according to claim 11. Suitable milk or mother's milk stored in the first or further storage means can be selected on the basis of the data stored in a memory by the features according to claim 12. Thus it is achieved that the individual animal is provided with milk or mother's milk which has been stored or supplied directly and whose composition corresponds to the current nutritive requirements of the individual animal.

In accordance with another aspect of the invention, the implement comprises automatic means for determining the current nutritive requirements and nutritive need of the individual animal, which automatic means are adapted to measure the condition, and/or the growth, and/or the weight, and/or the blood pressure of the individual animal. The composition of the feed is attuned to the current nutritive requirements of the individual animal, which composition consists of milk and auxilliary substances or mother's milk and auxilliary substances and which composition corresponds to a previously adjusted composition of the feed, which previously adjusted composition is stored in a memory. According to another characteristic of the invention, an algorithm calculates the previously adjusted composition of the feed for the individual animal on the basis of data stored in a memory, which data comprise values relating to the condition, growth and weight of the individual animal. A memory stores the values relating to the determination or calculation of the current nutritive requirements, and/or the nutritive need, and/or the composition of the milk or mother's milk and/or the composition of the feed.

According to a further inventive feature, the means adapted to measure the condition of the a individual animal comprise a picture processing device and/or a colour sensor and/or an air sampling device and/or a sphygmomanometer and/or a temperature sensor. Such an air sampling device is known from EP 0 670 673 disclosing a device that collects air samples in the vicinity of an animal, analyses same and establishes with the aid thereof the animal's condition. The means adapted to measure the growth of the individual animal comprise acoustic or optical sensors, or a picture processing device. The means adapted to measure the weight of the individual animal comprise a pair of scales, strain gauges or piezo elements. The strain gauges or plezo elements may be fitted in the floor, so that the floor of the feeding station can be cleaned easily.

In accordance with again another aspect of the invention, the metering device is provided with a feeding trough and/or a drinking spout, such as a flexible nipple. According to another aspect of the invention, the metering device is provided with a temperature sensor. In a preferred embodiment of the invention, the metering device consists of a rubber nipple provided with a temperature sensor, so that the condition of the individual animal can be established.

According to another inventive feature, the implement is provided with an automatic mixing device adapted to add auxilliary substances to the milk or mother's milk which auxilliary substances are attuned to the current nutritive requirements of the individual animal. For that purpose the automatic mixing device is provided with storage means for storing auxiliary substances such as water, medicaments, vitamins, nutritive supplements, immunological stimulants, or growth stimulants, such as hormones.

In accordance with a further inventive feature, the transport system comprises computer controlled valves. According to again another inventive feature, the implement is provided with a first and a second volume flow meter. The first volume flow meter is suitable for measuring the amount of milk or mother's milk. This milk or mother's milk is yielded by the milking machine. The second volume flow meter is suitable for measuring the amount of feed supplied by the transport system to the metering device.

According to another aspect of the invention, the implement comprises an automatic analysis device adapted to perform measurements on the milk or mother's milk. The automatic analysis device is adapted to measure whether the milk or mother's milk is suitable for being supplied to an animal. The automatic analysis device is also adapted to measure the composition of the milk or mother's milk. According to another aspect of the invention, the automatic analysis device is adapted to store in a memory the amount and/or the composition of the milk or mother's milk and one or more characteristics of the dairy animal from which the milk or mother's milk has been yielded. The automatic analysis device is adapted to measure colour, cell count, hormones, germ count, nutritional value, contamination and concentration of antibiotics in the milk or mother's milk. The automatic analysis device is also adapted to apply DNA analysis techniques, such as PCR and NASBA, to the milk or mother's milk. According to another inventive feature, the automatic analysis device is adapted to remove the milk or mother's milk or to supply same to a first or further storage means serving to supply the milk or mother's milk to the animal at a later point of time.

In accordance with again another inventive feature, the first storage means is provided with one or more reservoirs. According to another inventive feature, the first storage means is provided with coolers. The first storage means can also be provided with a temperature regulator. A memory is adapted to store the position of the milk or mother's milk in the first storage means, one or more characteristics, such as an identification number, of the individual animal from which the milk or mother's milk has been yielded, and the composition and/or the amount of the milk or mother's milk. According to another inventive feature, the first storage means is adapted to store the milk or mother's milk in a liquid phase. According to again another aspect of the invention, one or more reservoirs are designed as refrigerated tanks. One or more reservoirs can also be designed as carousels and/or as sample racks. In this form the milk or mother's milk can easily be stored in separate reservoirs and be recollected.

According to a further inventive feature, the further storage means is provided with one or more reservoirs. The further storage means may be provided with coolers. According to another inventive feature, the further storage means is provided with a temperature regulator. According to again another inventive feature, a memory is adapted to store the position of the milk or mother's milk in the further storage means, one or more characteristics of the dairy animal from which the milk or mother's milk has been yielded, and the composition and/or the amount of the milk or mother's milk. According to a further inventive feature, the further storage means is adapted to store the milk or mother's milk in a solid phase. According to another inventive feature, one or more reservoirs are designed as freezing chambers or freezing-dry chambers. One or more reservoirs may also be designed as carousels and/or as sample racks.

In accordance with a further inventive feature, the implement comprises one or more temperature regulating means adapted to warm up the feed automatically, so that the feed is adapted to be consumed by the individual animal. According to a last inventive feature, the implement comprises means adapted to sterilize and/or pasteurize the feed automatically.

The invention will now be explained in further detail with reference to the drawing of an exemplary embodiment of an implement according to the invention.

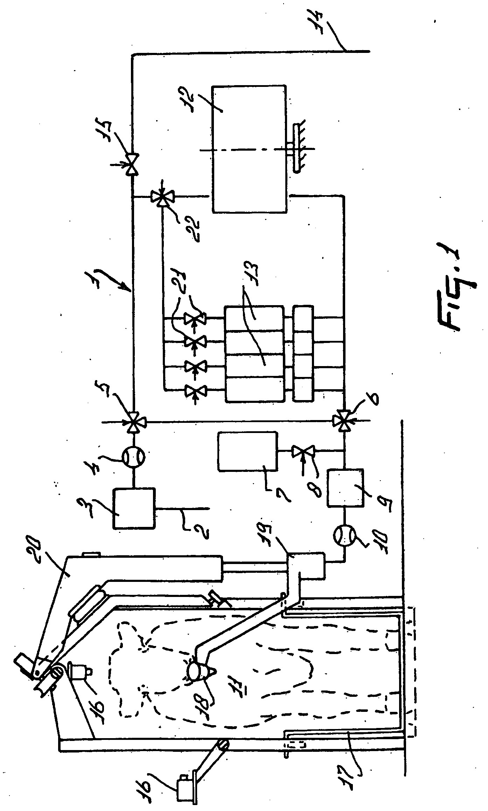

Figure 1 is a view of an implement according to the invention.

The embodiment of Figure 1 shows the implement. The implement is provided with a transport system 1 consisting, in a preferred embodiment, of a line system for the transport of milk or mother's milk, auxiliary substances and feed. The transport system is provided with automatic valves 8, 16, 21 and automatic three-way valves 5, 6, 22. From the inlet 2 the milk or mother's milk enters the implement from the milking machine which may consist of one or more milking robots. The milk or mother's milk is analysed by the automatic analysis device 3 measuring the composition of the milk or mother's milk. The results of the measurement of the composition together with the identification code of the mother cow are stored in a memory. The first volume flow meter 4 measures the amount of milk or mother's milk. This result is also stored in a memory together with the data from the automatic analysis device. Subsequently the milk or mother's milk can be supplied, via the three-way valve 5, automatically and directly to the individual animal 11, be stored in a first storage means 12 or a further storage means 13, or be discharged from the implement via a valve 15 and a discharge channel 14, for example to the sewer.

The storage of milk or mother's milk takes place in a first storage means 12 or a further storage means 13. In the first storage means 12 the milk or mother's milk is stored automatically, preferably in a liquid, cooled phase. The first storage means 12 is provided with separate reservoirs, so that the milk from different mother animals or dairy animals can be kept in the same storage means 12. In a memory are stored the composition of the milk or mother's milk, an identification code of the mother animal from which the milk or mother's milk has been yielded and the position of the milk or mother's milk in the first storage means 12. In a preferred embodiment of the invention, the first storage means 12 is designed as a sample rack or a carousel, so that in a relatively small space many milk samples can be kept separately and the samples can easily be stored in the first storage means 12 and be recollected therefrom. In the further storage means 13 the milk or mother's milk is stored automatically, preferably in a solid, cooled phase. The milk or mother's milk can be frozen, but as a result thereof the composition of the milk or mother's milk may change. Therefore, in a preferred embodiment of the invention, the further storage means 13 consists of a freezing-dry chamber in which the milk or mother's milk is stored automatically, its composition remaining unchanged. Also in this case the further storage means 13 is provided with separate reservoirs, so that the milk from different mother animals can be kept in the same storage means 13. In a memory are stored the composition of the milk or mother's milk, an identification code of the mother animal from which the milk or mother's milk has been yielded and the position of the milk or mother's milk in the further storage means 13. In a preferred embodiment of the invention, the further storage means 13 is also designed as a sample rack or a carousel, so that in a relatively small space many milk samples can be kept separately and the samples can easily be stored in the further storage means 13 and be recollected therefrom.

Via the automatic three-way valve 6 the milk or mother's milk coming directly from the milking machine or first having been stored in a first storage means 12 or a further storage means 13, is then supplied to the individual animal 11, while a warming up element 9 first warms up the feed or the milk or mother's milk, so as to make the feed or the milk or mother's milk suitable for consumption by the young animal The amount of feed supplied to the young animal is measured by means of a second volume flow meter 10.

When an animal enters the feeding station, it is identified automatically. The composition of the feed is adapted to the current nutritive need of the individual young animal. With the ald of the automatic mixing device 7 and the valve 8, auxiliary substances can be added to the milk or mother's milk, so that the feed is composed for the individual animal. The current nutritive need is determined by means of sensors, an algorithm and data relating to the condition, growth and weight of the individual animal, which data are stored in a memory. These sensors comprise in this embodiment: optical sensors 16 for measuring the condition and growth of the animal, a weighing device 17 and a temperature sensor in the metering device 18.

Then the individual animal is fed by means of a metering device which, in this embodiment, is connected to a movable arm 19. Said movable arm may be connected to a pivotable arm 20.

## Claims

1. An implement for automatically feeding animals, such as calves or cows, comprising
- means for attuning the amount of feed to the nutritive need of the individual animal,
- means for supplying the feed to the individual animal,
**characterized in that** the implement comprises
- a milking machine for yielding the milk or mother's milk, and
- means for supplying the milk or mother's milk automatically, and directly from the milking machine to the individual animal said means comprising a transport system for liquids, a metering device and a feeding station for animals which is coupled to a milking machine, wherein the transport system is adapted to supply the milk or mother's milk from the milking machine directly to a metering device.

2. An implement as claimed in claim 1, **characterized in that** the implement comprises
- means for identifying an individual animal,
- means for providing the individual animal with feed, provided that a preset time has elapsed since the last feeding of this individual animal.

3. An implement as claimed in claim 1 or 2, **characterized in that** the implement comprises
- means for automatically attuning the composition of the feed to the current nutritive requirements of the individual animal.

4. An implement as claimed in any one of claims 1 - 3 **characterized in that** the implement comprises
- means for automatically attuning the composition of the feed to the current nutritive requirements of the individual animal by adding one or more auxillary substances.

5. An implement as claimed in any one of claims 1 - 4, **characterized in that** the implement comprises
- means for automatically adding to the composition of the feed at least one or more auxillary substances, such as water, vitamins, medicaments, nutritive supplements, immunological stimulants, or growth stimulants, such as hormones.

6. An implement as claimed in any one of the preceding claims, **characterized in that** the implement comprises
- means for automatically determining the composition of the milk or mother's milk,
- means for automatically discharging or storing the milk or mother's milk yielded by the milking machine in a first or further storage means on the basis of said determination.

7. An implement as claimed in anyone of the preceding claims, **characterized in that** the implement comprises
- means for cooling down and storing the milk or mother's milk yielded by the milking machine in a liquid or solid phase in a first or further storage means.

8. An implement as claimed in any one of the preceding claims, **characterized in that** the implement comprises
- means for storing one or more characteristics, such as an identification number, of the dairy animal, such as a cow from which the milk or mother's milk has been yielded, in a memory,
- means for supplying the milk or mother's milk from the dairy animal to the corresponding individual animal, such as a calf or a cow.

9. An implement as claimed in any one of the preceding claims, **characterized in that** the implement comprises
- automatic means for determining the current nutritive requirements of the individual animal,
- means for attuning the composition of the feed to the current nutritive requirements of the individual animal.

10. An implement as claimed in claim 9, **characterized in that**
- the automatic means are adapted to determine the current nutritive requirements of the individual animal in an optical and/or acoustic manner, and/or on the basis of the weight and/or one of more dimensions of the individual animal.

11. An implement as claimed in any one of the preceding claims, **characterized in that** the implement comprises
- means for storing the data relating to the determination of the current nutritive requirements, nutritive need, the composition of the milk or mother's milk and the composition of the feed in a memory, and
- means for storing one or more characteristics, such as an identification number, of the individual animal in a memory.

12. An implement as claimed in any one of the preceding claims, **characterized in that** the implement comprises
- means for selecting suitable milk or mother's milk stored in the first or further storage means on the basis of the data stored in a memory.

13. An implement as claimed in any one of the preceding claims, **characterized in that** the implement comprises automatic means for determining the current nutritive requirements and nutritive need of the individual animal, which automatic means are adapted to measure the condition and/or the growth and/or the weight and/or the blood pressure of the individual animal.

14. An implement as claimed in any one of the preceding claims, **characterized in that** the composition of the feed is attuned to the current nutritive requirements of the individual animal, which composition consists of milk and auxiliary substances or mother's milk and auxiliary substances and which composition corresponds to a previously adjusted composition of the feed, which previously adjusted composition is stored in a memory.

15. An implement as claimed in any one of the preceding claims, **characterized in that** an algorithm calculates the previously adjusted composition of the feed for the individual animal on the basis of data stored in a memory, which data comprise values relating to the condition, growth and weight of the individual animal.

16. An implement as claimed in any one of the preceding claims, **characterized in that** a memory stores the values relating to the determination or calculation of the current nutritive requirements, and/or the nutritive need, and/or the composition of the milk or mother's milk and/or the composition of the feed.

17. An implement as claimed in claim 13, **characterized in that** the means adapted to measure the condition of the individual animal comprise a picture processing device and/or a colour sensor and/or an air sampling device and/or a sphygmomanometer and/or a temperature sensor.

18. An implement as claimed in claim 13, **characterized in that** the means adapted to measure the growth of the individual animal comprise acoustic and/or optical sensors, or a picture processing device.

19. An implement as claimed in claim 13, **characterized in that** the means adapted to measure the weight of the individual animal comprise a pair of scales, strain gauges or plaza elements.

20. An implement as claimed in any one of the preceding claims, **characterized in that** the metering device is provided with a feeding trough and/or a drinking spout, such as a flexible nipple.

21. An implement as claimed in any one of the preceding claims, **characterized in that** the metering device is provided with a temperature sensor.

22. An implement as claimed in any one of the preceding claims, **characterized in that** the implement is provided with an automatic mixing device adapted to add auxiliary substances to the milk or mother's milk, which auxiliary substances are attuned to the current nutritive requirements of the individual animal.

23. An implement as claimed in claim 22, **characterized in that** the automatic mixing device is provided with storage means for storing auxiliary substances such as water, medicaments, vitamins, nutritive supplements, immunological stimulants, or growth stimutants, such as hormones.

24. An implement as claimed in any one of the preceding claims, **characterized in that** the transport system comprises computer controlled valves.

25. An implement as claimed in any one of the preceding claims, **characterized in that** the implement is provided with a first and a second volume flow meter.

26. An implement as claimed in claim 25, **characterized in that** the first volume flow meter is suitable for measuring the amount of milk or mother's milk.

27. An implement as claimed in claim 26, **characterized in that** the second volume flow meter is suitable for measuring the amount of feed supplied by the transport system to the metering device.

28. An implement as claimed in any one of the preceding claims, **characterized in that** the implement comprises an automatic analysis device adapted to perform measurements on the milk or mother's milk.

29. An implement as claimed in claim 28, **characterized in that** the automatic analysis device is adapted to measure whether the milk or mother's milk is suitable for being supplied to an animal.

30. An implement as claimed in any one of claims 28-29, **characterized in that** the automatic analysis device is adapted to measure the composition of the milk or mother's milk.

31. An implement as claimed in any one of claims 28-30, **characterized in that** the automatic analysis device is adapted to store in a memory the amount and/or the composition of the milk or mother's milk and one or more characteristics of the individual animal from which the milk or mother's milk has been yielded.

32. An implement as claimed in any one of claims 28-31, **characterized in that** the automatic analysts device is adapted to measure colour, cell count, hormones, germ count, nutritional value, contamination and concentration of antibiotics in the milk or mother's milk.

33. An implement as claimed in any one of claims 28-32, **characterized in that** the automatic analysis device is adaptad to apply DNA-analysis techniques, such as PCR and NASBA, to the milk or mother's milk.

34. An implement as claimed in any one of claims 28-33, **characterized in that** the automatic analys device is adapted to remove the milk or mother's milk from the implement or to supply same to a first or further storage means.

35. An implement as claimed in any one of the preceding claims, **characterized in that** there are provided first or further storage means and the first storage means is provided with one or more reservoirs.

36. An implement as claimed in claim 35, **characterized in that** the fist storage means is provided with coolers.

37. An implement as claimed in any one of claims 35-36, **characterized in that** the first storage means is provided with a temperature regulator.

38. An implement as claimed in any one of claims 35-37 **characterized in that** a memory is adapted to store the position of the milk or mother's milk in the first storage means, one or more characteristics, such as an identification number, of the individual animal from which the milk or mother's milk has been yielded, and the composition and/or the amount of the milk or mother's milk.

39. An implement as claimed in any one of claims 35-38, **characterized in that** the first storage means is adapted to store the milk or mother's milk in a liquid phase.

40. An implement as claimed in any one of claims 35-39, **characterized in that** one or more reservoirs are designed as refrigerated tanks.

41. An implement as claimed in any one of claims 35-40, **characterized in that** one or more reservoirs are designed as carousels and/or as sample racks.

42. An implements claimed in anyone of the preceding claims, **characterized in that** there are provided first or further storage means and the further storage means is provided with one or more reservoirs.

43. An implement as claimed in claim 42, **characterized in that** the further storage means is provided with coolers.

44. An implement as claimed in any one of claims 42-43, **characterized in that** the further storage means is provided with a temperature regulator.

45. An implement as claimed in any one of claims 42-44, **characterized in that** a memory is adapted to store the position of the milk or mother's milk in the further storage means, one or more characteristics of the dairy animal from which the milk or mother's milk has been yielded and the composition and/or the amount of the milk or mother's milk.

46. An implement as claimed in any one of claims 42-45, **characterized in that** the further storage means is adapted to store the milk or mother's milk in a solid phase.

47. An implement as claimed in any one of claims 42-46, **characterized in that** one or more reservoirs are designed as freezing chambers and/or freezing-dry chambers.

48. An implement as claimed in any one of claims 42-47, **characterized in that** one or more reservoirs are designed as carousels and/or as sample racks.

49. An implement as claimed in any one of the preceding claims, **characterized in that** the implement comprises one or more temperature regulating means adapted to warm up the feed automatically, so that the feed is adapted to be consumed by the individual animal.

50. An implement as claimed in any one of the preceding claims, **characterized in that** the implement comprises means adapted to sterilize and/or pasteurize the feed automatically.

## Patentansprüche

1. Vorrichtung zum automatischen Füttern von Tieren, wie z. B. Kälbern oder Kühen, mit
- Mitteln zum Abstimmen der Futtermenge auf den Futterbedarf des einzelnen Tieres,
- Mitteln zum Zuführen des Futters zu dem einzelnen Tier,
**dadurch gekennzeichnet, dass** die Vorrichtung
- eine Melkmaschine zum Gewinnen der Milch oder Muttermilch umfasst sowie
- Mittel, um die Milch oder Muttermilch dem einzelnen Tier automatisch und direkt von der Melkmaschine zuzuführen, wobei die Mittel ein Transportsystem für Flüssigkeiten, eine Dosiervorrichtung und eine Fütterungsstation für Tiere umfassen, die mit einer Melkmaschine verbunden ist, wobei das Transportsystem geeignet ist, die Milch oder Muttermilch von der Melkmaschine direkt einer Dosiervorrichtung zuzuführen.

2. Vorrichtung nach Anspruch 1,
**dadurch gekennzeichnet, dass** die Vorrichtung
- Mittel zum Identifizieren eines einzelnen Tieres umfasst sowie
- Mittel zum Versorgen des einzelnen Tieres mit Futter unter der Voraussetzung, dass eine vorgegebene Zeit seit dem letzten Füttern dieses einzelnen Tieres verstrichen ist.

3. Vorrichtung nach Anspruch 1 oder 2,
**dadurch gekennzeichnet, dass** die Vorrichtung
- Mittel zum automatischen Abstimmen der Zusammensetzung des Futters auf die aktuellen Ernährungsbedürfnisse des einzelnen Tieres umfasst.

4. Vorrichtung nach einem der Ansprüche 1 bis 3,
**dadurch gekennzeichnet, dass** die Vorrichtung
- Mittel zum automatischen Abstimmen der Zusammensetzung des Futters auf die aktuellen Ernährungsbedürfnisse des einzelnen Tieres durch Zusetzen eines oder mehrerer Zusatzstoffe umfasst.

5. Vorrichtung nach einem der Ansprüche 1 bis 4,
**dadurch gekennzeichnet, dass** die Vorrichtung
- Mittel umfasst, um der Zusammensetzung des Futters automatisch mindestens einen oder mehrere Zusatzstoffe, wie z. B. Wasser, Vitamine, Medikamente, Nahrungsergänzungsstoffe, immunologische Stimulanzien oder Wachstumsstimulanzien, wie z. B. Hormone, zuzusetzen.

6. Vorrichtung nach einem der vorhergehenden Ansprüche,
**dadurch gekennzeichnet, dass** die Vorrichtung
- Mittel zum automatischen Bestimmen der Zusammensetzung der Milch oder Muttermilch umfasst sowie
- Mittel, um auf der Basis dieser Bestimmung die von der Melkmaschine gewonnene Milch oder Muttermilch automatisch abzuleiten oder in einem ersten oder weiteren Lagermitteln zu lagern.

7. Vorrichtung nach einem der vorhergehenden Ansprüche,
**dadurch gekennzeichnet, dass** die Vorrichtung
- Mittel umfasst, um die von der Melkmaschine gewonnene Milch oder Muttermilch zu kühlen und in flüssigem oder festem Zustand in einem ersten oder weiteren Lagermitteln zu lagern.

8. Vorrichtung nach einem der vorhergehenden Ansprüche,
**dadurch gekennzeichnet, dass** die Vorrichtung
- Mittel umfasst, um ein oder mehrere Charakteristika, wie z. B. eine Identifikationsnummer, des milchgebenden Tieres, wie z. B. einer Kuh, von dem die Milch oder Muttermilch gewonnen wurde, in einem Speicher zu speichern,
- sowie Mittel zum Zuführen der Milch oder Muttermilch von dem milchgebenden Tier zu dem entsprechenden einzelnen Tier, wie z. B. einem Kalb oder einer Kuh.

9. Vorrichtung nach einem der vorhergehenden Ansprüche,
**dadurch gekennzeichnet, dass** die Vorrichtung
- automatische Mittel zum Bestimmen der aktuellen Ernährungsbedürfnisse des einzelnen Tieres umfasst sowie
- Mittel zum Abstimmen der Zusammensetzung des Futters auf die aktuellen Ernährungsbedürfnisse des einzelnen Tieres.

10. Vorrichtung nach Anspruch 9,
**dadurch gekennzeichnet, dass**
- die automatischen Mittel geeignet sind, die aktuellen Ernährungsbedürfnisse des einzelnen Tieres auf optische und/oder akustische Weise und/oder auf der Basis des Gewichts und/oder einer oder mehrerer Abmessungen des einzelnen Tieres zu bestimmen.

11. Vorrichtung nach einem der vorhergehenden Ansprüche,
**dadurch gekennzeichnet, dass** die Vorrichtung
- Mittel umfasst, um die Daten bezüglich der Bestimmung der aktuellen Ernährungsbedürfnisse, des Futterbedarfs, der Zusammensetzung der Milch oder Muttermilch und der Zusammensetzung des Futters in einem Speicher zu speichern, sowie
- Mittel zum Speichern eines oder mehrerer Charakteristika, wie z. B. einer Identifikationsnummer, des einzelnen Tieres in einem Speicher.

12. Vorrichtung nach einem der vorhergehenden Ansprüche,
**dadurch gekennzeichnet, dass** die Vorrichtung
- Mittel umfasst, um geeignete Milch oder Muttermilch, die in dem ersten oder weiteren Lagermitteln gelagert ist, auf der Basis der in einem Speicher gespeicherten Daten auszuwählen.

13. Vorrichtung nach einem der vorhergehenden Ansprüche,
**dadurch gekennzeichnet, dass** die Vorrichtung automatische Mittel zum Bestimmen der aktuellen Ernährungsbedürfnisse und des Futterbedarfs des einzelnen Tieres umfasst, wobei die automatischen Mittel geeignet sind, die Verfassung und/oder das Wachstum und/oder das Gewicht und/oder den Blutdruck des einzelnen Tieres zu messen.

14. Vorrichtung nach einem der vorhergehenden Ansprüche,
**dadurch gekennzeichnet, dass** die Zusammensetzung des Futters auf die aktuellen Ernährungsbedürfnisse des einzelnen Tieres abgestimmt ist, wobei die Zusammensetzung aus Milch und Zusatzstoffen oder Muttermilch und Zusatzstoffen besteht, und wobei die Zusammensetzung einer vorher eingestellten Zusammensetzung des Futters entspricht, wobei die vorher eingestellte Zusammensetzung in einem Speicher gespeichert ist.

15. Vorrichtung nach einem der vorhergehenden Ansprüche,
**dadurch gekennzeichnet, dass** ein Algorithmus die vorher eingestellte Zusammensetzung des Futters für das einzelne Tier auf der Basis von in einem Speicher gespeicherten Daten berechnet, wobei die Daten Werte bezüglich der Verfassung, des Wachstums und des Gewichts des einzelnen Tieres umfassen.

16. Vorrichtung nach einem der vorhergehenden Ansprüche,
**dadurch gekennzeichnet, dass** ein Speicher die Werte bezüglich der Bestimmung oder Berechnung der aktuellen Ernährungsbedürfnisse und/oder des Futterbedarfs und/oder der Zusammensetzung der Milch oder Muttermilch und/oder der Zusammensetzung des Futters speichert.

17. Vorrichtung nach Anspruch 13,
**dadurch gekennzeichnet, dass** die Mittel zum Messen der Verfassung des einzelnen Tieres eine Bildverarbeitungsvorrichtung und/oder einen Farbsensor und/oder eine Luftprobenentnahmevorrichtung und/oder ein Blutdruckmessgerät und/oder einen Temperatursensor umfassen.

18. Vorrichtung nach Anspruch 13,
**dadurch gekennzeichnet, dass** die Mittel zum Messen des Wachstums des einzelnen Tieres akustische und/oder optische Sensoren oder eine Bildverarbeitungsvorrichtung umfassen.

19. Vorrichtung nach Anspruch 13,
**dadurch gekennzeichnet, dass** die Mittel zum Messen des Gewichts des einzelnen Tieres eine Balkenwaage, Dehnungsmesser oder Piezoelemente umfassen.

20. Vorrichtung nach einem der vorhergehenden Ansprüche,
**dadurch gekennzeichnet, dass** die Messvorrichtung mit einem Futtertrog und/oder einer Trinktülle, wie z. B. einem elastischen Nippel, versehen ist.

21. Vorrichtung nach einem der vorhergehenden Ansprüche,
**dadurch gekennzeichnet, dass** die Messvorrichtung mit einem Temperatursensor versehen ist.

22. Vorrichtung nach einem der vorhergehenden Ansprüche,
**dadurch gekennzeichnet, dass** die Vorrichtung mit einer automatischen Mischvorrichtung zum Zusetzen von Zusatzstoffen zu der Milch oder Muttermilch versehen ist, wobei die Zusatzstoffe auf die aktuellen Ernährungsbedürfnisse des einzelnen Tieres abgestimmt sind.

23. Vorrichtung nach Anspruch 22,
**dadurch gekennzeichnet, dass** die automatische Mischvorrichtung mit Lagermitteln zum Lagern von Zusatzstoffen, wie z. B. Wasser, Medikamenten, Vitaminen, Nahrungsergänzungsstoffen, immunologischen Stimulanzien oder Wachstumsstimulanzien, wie z. B. Hormonen, versehen ist.

24. Vorrichtung nach einem der vorhergehenden Ansprüche,
**dadurch gekennzeichnet, dass** das Transportsystem rechnergesteuerte Ventile umfasst.

25. Vorrichtung nach einem der vorhergehenden Ansprüche,
**dadurch gekennzeichnet, dass** die Vorrichtung mit einem ersten und einem zweiten Volumendurchflussmesser versehen ist.

26. Vorrichtung nach Anspruch 25,
**dadurch gekennzeichnet, dass** der erste Volumendurchflussmesser geeignet ist, die Menge an Milch oder Muttermilch zu messen.

27. Vorrichtung nach Anspruch 26,
**dadurch gekennzeichnet, dass** der zweite Volumendurchflussmesser geeignet ist, die Menge an Futter zu messen, die der Dosiervorrichtung durch das Transportsystem zugeführt wird.

28. Vorrichtung nach einem der vorhergehenden Ansprüche,
**dadurch gekennzeichnet, dass** die Vorrichtung eine automatische Analysiervorrichtung umfasst, die geeignet ist, Messungen an der Milch oder Muttermilch durchzuführen.

29. Vorrichtung nach Anspruch 28,
**dadurch gekennzeichnet, dass** die automatische Analysiervorrichtung messen kann, ob die Milch oder Muttermilch geeignet ist, einem Tier zugeführt zu werden.

30. Vorrichtung nach einem der Ansprüche 28 bis 29, **dadurch gekennzeichnet, dass** die automatische Analysiervorrichtung geeignet ist, die Zusammensetzung der Milch oder Muttermilch zu messen.

31. Vorrichtung nach einem der Ansprüche 28 bis 30, **dadurch gekennzeichnet, dass** die automatische Analysiervorrichtung geeignet ist, in einem Speicher die Menge und/oder die Zusammensetzung der Milch oder Muttermilch und ein oder mehrere Charakteristika des einzelnen Tieres zu speichern, von dem die Milch oder Muttermilch gewonnen wurde.

32. Vorrichtung nach einem der Ansprüche 28 bis 31, **dadurch gekennzeichnet, dass** die automatische Analysiervorrichtung geeignet ist, die Farbe, den Zellgehalt, die Hormone, den Keimgehalt, den Nährwert, die Verunreinigung und die Konzentration von Antibiotika in der Milch oder Muttermilch zu messen.

33. Vorrichtung nach einem der Ansprüche 28 bis 32, **dadurch gekennzeichnet, dass** die automatische Analysiervorrichtung geeignet ist, DNA-Analyseverfahren, wie z. B. PCR und NASBA, bei der Milch oder Muttermilch anzuwenden.

34. Vorrichtung nach einem der Ansprüche 28 bis 33,
**dadurch gekennzeichnet, dass** die automatische Analysiervorrichtung geeignet ist, die Milch oder Muttermilch aus der Vorrichtung zu entnehmen oder sie einem ersten oder weiteren Lagermitteln zuzuführen.

35. Vorrichtung nach einem der vorhergehenden Ansprüche,
**dadurch gekennzeichnet, dass** ein erstes oder weitere Lagermittel vorhanden sind, und dass das erste Lagermittel mit einem oder mehreren Behältern versehen ist.

36. Vorrichtung nach Anspruch 35,
**dadurch gekennzeichnet, dass** das erste Lagermittel mit Kühlvorrichtungen versehen ist.

37. Vorrichtung nach einem der Ansprüche 35 bis 36,
**dadurch gekennzeichnet, dass** das erste Lagermittel mit einem Temperaturregler versehen ist.

38. Vorrichtung nach einem der Ansprüche 35 bis 37,
**dadurch gekennzeichnet, dass** ein Speicher geeignet ist, die Position der Milch oder Muttermilch in dem ersten Lagermittel, ein oder mehrere Charakteristika, wie z. B. eine Identifikationsnummer, des einzelnen Tieres, von dem die Milch oder Muttermilch gewonnen wurde, und die Zusammensetzung und/oder die Menge der Milch oder Muttermilch zu speichern.

39. Vorrichtung nach einem der Ansprüche 35 bis 38,
**dadurch gekennzeichnet, dass** das erste Lagermittel geeignet ist, die Milch oder Muttermilch in flüssigem Zustand zu lagern.

40. Vorrichtung nach einem der Ansprüche 35 bis 39,
**dadurch gekennzeichnet, dass** ein oder mehrere Behälter als Kühltanks ausgeführt sind.

41. Vorrichtung nach einem der Ansprüche 35 bis 40,
**dadurch gekennzeichnet, dass** ein oder mehrere Behälter als Drehtische und/oder Probengestelle ausgeführt sind.

42. Vorrichtung nach einem der vorhergehenden Ansprüche,
**dadurch gekennzeichnet, dass** erste oder weitere Lagermittel vorhanden sind, und dass die weiteren Lagermittel mit einem oder mehreren Behältern versehen sind.

43. Vorrichtung nach Anspruch 42,
**dadurch gekennzeichnet, dass** die weiteren Lagermittel mit Kühlvorrichtungen versehen sind.

44. Vorrichtung nach einem der Ansprüche 42 bis 43,
**dadurch gekennzeichnet, dass** die weiteren Lagermittel mit einem Temperaturregler versehen sind.

45. Vorrichtung nach einem der Ansprüche 42 bis 44,
**dadurch gekennzeichnet, dass** ein Speicher geeignet ist, die Position der Milch oder Muttermilch in den weiteren Lagermitteln, ein oder mehrere Charakteristika des milchgebenden Tieres, von dem die Milch oder Muttermilch gewonnen wurde, und die Zusammensetzung und/oder die Menge der Milch oder Muttermilch zu speichern.

46. Vorrichtung nach einem der Ansprüche 42 bis 45,
**dadurch gekennzeichnet, dass** die weiteren Lagermittel geeignet sind, die Milch oder Muttermilch in festem Zustand zu lagern.

47. Vorrichtung nach einem der Ansprüche 42 bis 46,
**dadurch gekennzeichnet, dass** ein oder mehrere Behälter als Gefrierkammern und/oder Gefriertrocknungskammern ausgeführt sind.

48. Vorrichtung nach einem der Ansprüche 42 bis 47,
**dadurch gekennzeichnet, dass** ein oder mehrere Behälter als Drehtische und/oder Probengestelle ausgeführt sind.

49. Vorrichtung nach einem der vorhergehenden Ansprüche,
**dadurch gekennzeichnet, dass** die Vorrichtung eine oder mehrere Temperaturregelvorrichtungen umfasst, die geeignet sind, das Futter automatisch zu erwärmen, so dass das Futter von dem einzelnen Tier verzehrt werden kann.

50. Vorrichtung nach einem der vorhergehenden Ansprüche,
**dadurch gekennzeichnet, dass** die Vorrichtung Mittel umfasst, die geeignet sind, das Futter automatisch zu sterilisieren und/oder zu pasteurisieren.

## Revendications

1. Accessoire destiné à alimenter automatiquement des animaux, tels que des veaux ou des vaches, comprenant
- un moyen permettant de régler la quantité d'alimentation selon les besoins nutritifs de l'animal donné,
- un moyen permettant de fournir l'alimentation à l'animal donné,
**caractérisé en ce que** l'accessoire comprend
- une machine à traire destinée à fournir le lait ou le lait maternel, et
- un moyen destiné à fournir le lait ou le lait maternel automatiquement, et directement depuis la machine à traire, à l'animal donné, ledit moyen comprenant un système de transport de liquides, un dispositif de dosage et un poste d'alimentation d'animaux qui est couplé à une machine à traire et le système de transport étant conçu pour fournir le lait ou le lait maternel depuis la machine à traire directement à un dispositif de dosage.

2. Accessoire selon la revendication 1, **caractérisé en ce que** l'accessoire comprend
- un moyen d'identification d'un animal donné,
- un moyen destiné à fournir une alimentation à l'animal donné,
à condition qu'une durée prédéfinie se soit écoulée depuis la dernière alimentation de cet animal donné.

3. Accessoire selon la revendication 1 ou 2, **caractérisé en ce que** l'accessoire comprend
- un moyen permettant de régler automatiquement la composition de l'alimentation selon les besoins nutritifs actuels de l'animal donné.

4. Accessoire selon l'une quelconque des revendications 1 à 3, **caractérisé en ce que** l'accessoire comprend
- un moyen permettant de régler automatiquement la composition de l'alimentation selon les besoins nutritifs actuels de l'animal donné en ajoutant une ou plusieurs substance(s) auxiliaire(s).

5. Accessoire selon l'une quelconque des revendications 1 à 4, **caractérisé en ce que** l'accessoire comprend
- un moyen permettant d'ajouter automatiquement à la composition de l'alimentation au moins une ou plusieurs substance (s) auxiliaire(s), telle (s) que de l'eau, des vitamines, des médicaments, des compléments nutritifs, des stimulants immunologiques, ou des stimulateurs de croissance, tels que des hormones.

6. Accessoire selon l'une quelconque des revendications précédentes, **caractérisé en ce que** l'accessoire comprend
- un moyen permettant de déterminer automatiquement la composition du lait ou du lait maternel,
- un moyen permettant d'évacuer ou de stocker automatiquement le lait ou le lait maternel fourni par la machine à traire dans un premier moyen de stockage ou un autre moyen de stockage sur la base de ladite détermination.

7. Accessoire selon l'une quelconque des revendications précédentes, **caractérisé en ce que** l'accessoire comprend
- un moyen permettant de refroidir et de stocker le lait ou le lait maternel fourni par la machine à traire dans une phase liquide ou solide dans un premier moyen de stockage ou un autre moyen de stockage.

8. Accessoire selon l'une quelconque des revendications précédentes, **caractérisé en ce que** l'accessoire comprend
- un moyen permettant de stocker une ou plusieurs caractéristique(s), telle(s) qu'un numéro d'identification, de l'animal laitier, tel qu'une vache à partir de laquelle le lait ou le lait maternel a été fourni, dans une mémoire,
- un moyen permettant de fournir le lait ou le lait maternel de l'animal laitier vers l'animal individuel correspondant, tel qu'un veau ou une vache.

9. Accessoire selon l'une quelconque des revendications précédentes, **caractérisé en ce que** l'accessoire comprend
- un moyen automatique permettant de déterminer les besoins nutritifs actuels de l'animal donné,
- un moyen permettant de régler la composition de l'alimentation selon les besoins nutritifs actuels de l'animal donné.

10. Accessoire selon la revendication 9, **caractérisé en ce que**
- le moyen automatique est conçu pour déterminer les besoins nutritifs actuels de l'animal individuel de manière optique et/ou acoustique, et/ou sur la base du poids et/ou d'une ou plusieurs dimension(s) de l'animal individuel.

11. Accessoire selon l'une quelconque des revendications précédentes, **caractérisé en ce que** l'accessoire comprend
- un moyen permettant de stocker les données relatives à la détermination des besoins nutritifs actuels, à la composition du lait ou du lait maternel, et à la composition de l'alimentation dans une mémoire, et
- un moyen permettant de stocker une ou plusieurs caractéristique(s), telle(s) qu'un numéro d'identification, de l'animal individuel dans une mémoire.

12. Accessoire selon l'une quelconque des revendications précédentes, **caractérisé en ce que** l'accessoire comprend
- un moyen permettant de sélectionner du lait ou lait maternel adéquat stocké dans le premier moyen de stockage ou un autre moyen de stockage sur la base des données stockées dans une mémoire.

13. Accessoire selon l'une quelconque des revendications précédentes, **caractérisé en ce que** l'accessoire comprend un moyen automatique permettant de déterminer les besoins nutritifs actuels de l'animal donné, ledit moyen automatique étant conçu pour mesurer l'état et/ou la croissance et/ou le poids et/ou la pression artérielle de l'animal donné.

14. Accessoire selon l'une quelconque des revendications précédentes, **caractérisé en ce que** la composition de l'alimentation est réglée selon les besoins nutritifs actuels de l'animal donné, ladite composition consistant en du lait et des substances auxiliaires ou du lait maternel et des substances auxiliaires, et ladite composition correspondant à une composition préalablement définie de l'alimentation, ladite composition préalablement définie étant stockée dans une mémoire.

15. Accessoire selon l'une quelconque des revendications précédentes, **caractérisé en ce qu**'un algorithme calcule la composition préalablement définie de l'alimentation pour l'animal donné sur la base des données stockées dans une mémoire, lesdites données comprenant des valeurs relatives à l'état, à la croissance et au poids de l'animal donné.

16. Accessoire selon l'une quelconque des revendications précédentes, **caractérisé en ce qu**'une mémoire stocke les valeurs relatives à la détermination ou au calcul des besoins nutritifs actuels, et/ou de la composition du lait ou du lait maternel, et/ou de la composition de l'alimentation.

17. Accessoire selon la revendication 13, **caractérisé en ce que** le moyen conçu pour mesurer l'état de l'animal donné comprend un dispositif de traitement d'image et/ou un capteur couleur et/ou un dispositif d'échantillonnage de l'air et/ou un sphygmomanomètre et/ou un capteur de température.

18. Accessoire selon la revendication 13, **caractérisé en ce que** le moyen conçu pour mesurer la croissance de l'animal donné comprend des capteurs acoustiques et/ou optiques, ou un dispositif de traitement d'image.

19. Accessoire selon la revendication 13, **caractérisé en ce que** le moyen conçu pour mesurer le poids de l'animal donné comprend une paire d'échelles graduées, d'extensomètres ou de piézo-éléments.

20. Accessoire selon l'une quelconque des revendications précédentes, **caractérisé en ce que** le dispositif de dosage est muni d'une auge et/ou d'un abreuvoir, tel qu'une tétine flexible.

21. Accessoire selon l'une quelconque des revendications précédentes, **caractérisé en ce que** le dispositif de dosage est muni d'un capteur de température.

22. Accessoire selon l'une quelconque des revendications précédentes, **caractérisé en ce que** l'accessoire est muni d'un dispositif de mélange automatique adapté afin d'ajouter des substances auxiliaires au lait ou au lait maternel, lesdites substances auxiliaires étant définies selon les besoins nutritifs actuels de l'animal donné.

23. Accessoire selon la revendication 22, **caractérisé en ce que** le dispositif de mélange automatique est muni d'un moyen de stockage permettant de stocker des substances auxiliaires telles que de l'eau, des médicaments, des vitamines, des compléments nutritifs, des stimulants immunologiques, ou des stimulateurs de croissance, tels que des hormones.

24. Accessoire selon l'une quelconque des revendications précédentes, **caractérisé en ce que** le système de transport comprend des soupapes commandées par ordinateur.

25. Accessoire selon l'une quelconque des revendications précédentes, **caractérisé en ce que** l'accessoire est muni d'un premier et d'un second compteur volumétrique.

26. Accessoire selon la revendication 25, **caractérisé en ce que** le premier compteur volumétrique est conçu pour mesurer la quantité de lait ou de lait maternel.

27. Accessoire selon la revendication 26, **caractérisé en ce que** le second compteur volumétrique est conçu pour mesurer la quantité d'alimentation fournie par le système de transport au dispositif de dosage.

28. Accessoire selon l'une quelconque des revendications précédentes, **caractérisé en ce que** l'accessoire comprend un dispositif d'analyse automatique adapté afin d'effectuer des mesures sur le lait ou le lait maternel.

29. Accessoire selon la revendication 28, **caractérisé en ce que** le dispositif d'analyse automatique est conçu pour mesurer si le lait ou le lait maternel convient pour être fourni à un animal.

30. Accessoire selon l'une quelconque des revendications 28 et 29, **caractérisé en ce que** le dispositif d'analyse automatique est conçu pour mesurer la composition du lait ou du lait maternel.

31. Accessoire selon l'une quelconque des revendications 28 à 30, **caractérisé en ce que** le dispositif d'analyse automatique est conçu pour stocker dans une mémoire la quantité et/ou la composition du lait ou du lait maternel et une ou plusieurs caractéristique(s) de l'animal donné qui a fourni le lait ou le lait maternel.

32. Accessoire selon l'une quelconque des revendications 28 à 31, **caractérisé en ce que** le dispositif d'analyse automatique est conçu pour mesurer la couleur, le nombre de cellules, les hormones, le nombre de germes, la valeur nutritionnelle, la contamination et la concentration en antibiotiques dans le lait ou le lait maternel.

33. Accessoire selon l'une quelconque des revendications 28 à 32, **caractérisé en ce que** le dispositif d'analyse automatique est adapté afin d'appliquer des techniques d'analyse d'ADN, telles que le PCR et le NASBA, au lait ou au lait maternel.

34. Accessoire selon l'une quelconque des revendications 28 à 33, **caractérisé en ce que** le dispositif d'analyse automatique est conçu pour retirer le lait ou le lait maternel de l'accessoire ou de fournir celui-ci à un premier moyen de stockage ou un autre moyen de stockage.

35. Accessoire selon l'une quelconque des revendications précédentes, **caractérisé en ce qu'**il est prévu un premier moyen de stockage ou un autre moyen de stockage, et le premier moyen de stockage est muni d'un ou de plusieurs réservoir(s).

36. Accessoire selon la revendication 35, **caractérisé en ce que** le premier moyen de stockage est muni de refroidisseurs.

37. Accessoire selon l'une quelconque des revendications 35 et 36, **caractérisé en ce que** le premier moyen de stockage est muni d'un régulateur de température.

38. Accessoire selon l'une quelconque des revendications 35 à 37, **caractérisé en ce qu**'une mémoire est adaptée afin de stocker la position du lait ou du lait maternel dans le premier moyen de stockage, une ou plusieurs caractéristique(s), telle(s) qu'un numéro d'identification, de l'animal donné qui a fourni le lait ou le lait maternel, et la composition et/ou la quantité de lait ou de lait maternel.

39. Accessoire selon l'une quelconque des revendications 35 à 38, **caractérisé en ce que** le premier moyen de stockage est conçu pour stocker le lait ou le lait maternel en phase liquide.

40. Accessoire selon l'une quelconque des revendications 35 à 39, **caractérisé en ce qu**'un ou plusieurs réservoir(s) est/sont conçu(s) comme des cuves réfrigérées.

41. Accessoire selon l'une quelconque des revendications 35 à 39, **caractérisé en ce qu**'un ou plusieurs réservoir(s) est/sont conçu(s) comme des carrousels et/ou comme des plateaux d'échantillons.

42. Accessoire selon l'une quelconque des revendications précédentes, **caractérisé en ce qu**'il prévu un premier moyen de stockage ou un autre moyen de stockage, et l'autre moyen de stockage est muni d'un ou de plusieurs réservoir(s).

43. Accessoire selon la revendication 42, **caractérisé en ce que** l'autre moyen de stockage est muni de refroidisseurs.

44. Accessoire selon l'une quelconque des revendications 42 et 43, **caractérisé en ce que** l'autre moyen de stockage est muni d'un régulateur de température.

45. Accessoire selon l'une quelconque des revendications 42 à 44, **caractérisé en ce qu**'une mémoire est adaptée afin de stocker la position du lait ou du lait maternel dans l'autre moyen de stockage, une ou plusieurs caractéristique(s) de l'animal laitier qui a fourni le lait ou le lait maternel, et la composition et/ou la quantité de lait ou de lait maternel.

46. Accessoire selon l'une quelconque des revendications 42 à 45, **caractérisé en ce que** l'autre moyen de stockage est conçu pour stocker le lait ou le lait maternel en phase solide.

47. Accessoire selon l'une quelconque des revendications 42 à 46, **caractérisé en ce qu**'un ou plusieurs réservoir(s) est/sont conçu(s) comme des chambres de congélation et/ou des chambres de lyophilisation.

48. Accessoire selon l'une quelconque des revendications 42 à 47, **caractérisé en ce qu'**un ou plusieurs réservoir(s) est/sont conçu(s) comme des carrousels et/ou comme des plateaux d'échantillons.

49. Accessoire selon l'une quelconque des revendications précédentes, **caractérisé en ce que** l'accessoire comprend un ou plusieurs moyen(s) de régulation de la température adapté(s) afin de réchauffer l'alimentation automatiquement, de telle sorte que l'alimentation soit adaptée pour être consommée par l'animal individuel.

50. Accessoire selon l'une quelconque des revendications précédentes, **caractérisé en ce que** l'accessoire comprend un moyen conçu pour stériliser et/ou pasteuriser l'alimentation automatiquement.
